# EUROPEAN PATENT SPECIFICATION

(11) **EP 3 564 563 B1**
(45) Date of publication and mention of the grant of the patent: **05.01.2022**
(21) Application number: 19170494.9
(22) Date of filing: 23.04.2019
(51) Int. Cl.: F16L 3/13, F16L 3/16, H02G 3/32, F16L 3/12

(54) **HOLDING DEVICE WHICH CAN BE FIXED TO A WALL FOR HOLDING A TUBE**
AN EINER WAND BEFESTIGBARE HALTEVORRICHTUNG ZUM HALTEN EINES ROHRES
DISPOSITIF DE MAINTIEN POUVANT ÊTRE FIXÉ À UNE PAROI POUR MAINTENIR UN TUBE

(30) Priority: 03.05.2018 ES 201830625 U
(43) Date of publication of application: 06.11.2019
(73) Proprietor: Unex Aparellaje Electrico S.L., 08903 L'Hospitalet de Llobregat (Barcelona) (ES)
(72) Inventor: SALCEDO SUÑOL, Eloi, 08903 L'Hospitalet de Llobregat (ES)
(74) Representative: Curell Suñol S.L.P.

(56) References cited:
- DE-U- 7 345 271
- FR-A- 1 286 788
- FR-A1- 2 677 730
- US-A- 1 808 328

## Description

### Field of the invention

The invention is comprised in the field of devices used for fixing to a wall or to another similar planar surface a tube that must run along the surface of said wall. In particular, but in a non-limiting manner, the tubes to which the invention is applied are fluid conduits and sheaths for electrical or signal cables.

Specifically, the invention relates to a holding device of the type which can be fixed to a wall for holding a tube, said holding device comprising a support surface for supporting said holding device against the wall, a through hole going through the support surface for the passage of a fixing screw, and at least one open clamp formed for holding a tube, said open clamp having an opening for inserting the tube into the open clamp by pressure.

### Prior art

Holding devices formed by a base which is fixed to a wall by means of a screw and a clamp in which the tube is inserted by pressure are known. The clamp consists of two facing arms arranged on one and the same plane forming an open ring. Documents EP1092903A1 and WO2008140300A1 show holding devices of this type. To fix the tube to the wall using these holding devices, a force must be applied on the tube against the arms of the clamp to cause elastic deformation of said arms, allowing the tube to be press-fitted into the clamp. A first drawback of this solution is that a considerable force must be applied on the tube so that the tube presses on the two arms of the clamp and is press-fitted into the clamp. If this force is applied on a smaller surface of the tube, for example, if the tube is pushed with a finger or by means of an object with edges, the tube may become damaged, particularly if the tube is a sheath for cables, for example, a flexible corrugated sheath. A second drawback is that when a rigid tube section is to be fixed by pressure to several holding devices arranged in a wall along the section, a force must be simultaneously applied on the tube at the level of each of the holding devices.

Holding devices such as the one described in document ES2181932T3 are also known, in which in order to fix the tube in the clamp the tube is not pressed against the arms of this clamp, but rather first inserted freely into the clamp which has an opening wider than the diameter of the tube, and the tube is then pressed against a strap which is arranged at the bottom of the clamp and causes, as a result of a lever effect, the bending of the arms which then close on the tube. The force that the user must apply on the tube for press-fitting it into the clamp is reduced in this solution. However, it does not solve the second drawback mentioned above. Moreover, there is the particular drawback of the strap at the bottom of the clamp hindering the passage of the screw for fixing the device to the wall.

FR2677730A1 discloses a holding device according to the preamble of claim 1 which comprises three bodies: a screw with a threaded head, a main body in which the open clamp is formed and a nut which is placed in a hole of the main body and which is screwed on the threaded head of the screw. The support surface, for supporting the holding device against a wall, is formed on the screw. In order to fix the holding device to a wall, the screw alone is firstly screwed to the wall. The main body, comprising the nut placed in the hole, is then brought over the screw and rotated in order to screw the nut on the threaded head of the screw. During the screwing, the nut is initially located in an upper portion of the hole where it tightly fits the perimeter of said hole, so that a relative rotation between the main body and the nut is prevented. The nut is therefore screwed to the threaded end of the screw by simply rotating the main body. In a final stage of the screwing, the nut is located in a lower, larger portion of the hole, so that a relative rotation between the main body and the nut is allowed. In this final position the main body is fixed to the screw through the nut in the axial direction of said screw but and it can be freely rotated without any effect on the fixing.

FR1286788A discloses a similar holding device, provided with a screw with a threaded head which must be firstly screwed alone to the wall. In this case the nut is riveted to the first body so that it can rotate.

### Description of the invention

The purpose of the invention is to provide a holding device for tubes of the type described above which can be easily fixed to a wall and allows holding a tube against the wall by means of a simple operation and without damaging the tube.

This is achieved by means of a holding device according to claim 1.

As will be seen in greater detail in the description of an embodiment below, the operation of the holding device according to the invention is basically as follows. First, the device is fixed to a wall by means of a fixing screw. The device is thereby supported against the wall through the support surface of the second body, such that the second body is fixed to the wall whereas the first body can rotate with respect to the second body about the axis of rotation. Next, a tube is inserted into the cradle through its open upper face, such that the tube occupies the free space demarcated by said cradle. Finally, rotation of the first body is performed causing the tube to be press-fitted into the clamp through the opening arranged in a plane parallel the axis of rotation. It will be seen that the tube is not moved in order to press-fit the tube into the clamp, rather the clamp is moved by means of the rotation of the first body, so no force is applied on the tube for moving it. To release the tube from the fixing device, rotation of the first body is performed in the opposite direction, such that no force is applied on the tube for moving it either. Furthermore, when several fixing devices are used for holding a tube section against a wall, the tube is first inserted with ease into all the cradles and the holding of the tube in each device is then performed individually by rotating the first bodies of the devices one after another, so a simultaneous coordinated action in all the devices is not required.

The open clamp may have various shapes. For example, it may have a C shape arranged on a plane parallel to the longitudinal direction of the free space. However, in the preferred embodiments the open clamp is formed by at least one hook-shaped arm extending in cantilever fashion in a plane parallel to the axis of rotation from a base of the first body forming the bottom of the cradle, such that the opening of the open clamp is formed by the separation between said base of the first body and the free end of said arm. This configuration is particularly simple, whereby making device manufacturing easier and furthermore providing a very robust device.

Preferably, the arm comprises an elastically flexible flange extending in cantilever fashion in an inner portion of said arm intended for supporting the tube, and a housing in which said flange is inserted upon being bent. The flange is pushed by the tube and inserted to a greater or lesser extent into the housing according to the diameter of the tube. This solution allows using one and the same device for holding tubes having a different diameter. Tubes having a smaller diameter are held with less force by the flange, whereas tubes having a larger diameter are held with greater force by the remaining portion of the arm, with the flange being completely retracted into the housing. It also allows suitably holding a tube having an irregular outer surface, or a lower compressive strength, such as a corrugated sheath for cables, for example.

Preferably, the intersection of the arm with the base forms a rounded corner of the bottom of the cradle in a plane orthogonal to the longitudinal direction of the free space. This shape allows better seating of the tube in the cradle.

Preferably, the arm has at its free end a beveled corner oriented towards the free space. This shape makes it easier to insert the tube into the clamp through the opening and reduces the risk of the tube being damaged by the end of the arm.

Preferably, the arm has an outer surface in the shape of a circular arc centered in the axis of rotation, the radius of said circular arc being greater than the distance from any point of the first body to said axis of rotation. This configuration allows the user to easily place the device as close as possible to a projecting surface of the wall, such as another wall perpendicular thereto, for example, with the assurance that the first body can rotate without interfering with the projecting surface after fixing the device to the wall.

Preferably, the open clamp is formed by two of said hook-shaped arms extending in parallel planes and in opposite directions on either side of said axis of rotation. This configuration allows the clamp to better hold the tube. Furthermore, it prevents the rotation of the first body from causing the tube to be pushed laterally, since the ends of the two arms apply opposing forces on the tube.

Preferably, the first body has a through aperture going through said first body, the second body is fitted into said through aperture of the first body such that a lower end of the second body projects from the first body and forms the support surface, the through hole goes through the second body and opens into the bottom of the cradle, and the second body has around the through hole a seating surface for receiving the head of a fixing screw, said seating surface being arranged in a sunken position with respect to the bottom of the cradle. This configuration provides a particularly compact holding device and prevents the head of the fixing screw from interfering with the tube arranged in the cradle.

Preferably, the second body has a frustoconical wall centered in the axis of rotation and tapering towards the end of the second body forming the support surface, and the through aperture has a frustoconical wall the shape of which corresponds with said frustoconical wall of the second body. This configuration blocks the movement of the first body with respect to the second body in the axial direction of the axis of rotation and in the direction away from the support surface without affecting the compactness of the device.

Preferably, the second body has a cylindrical wall following its frustoconical wall and teeth formed in said cylindrical wall, and the first body has an annular recess following its frustoconical wall, such that said teeth are inserted into said annular recess by pressure and keep the first body integrally joined with the second body in the axial direction of the axis of rotation and in the direction approaching said support surface. As a result of this configuration, the second body can be snap-fitted into the first body, such that the two bodies are integrally joined in the axial direction of the axis of rotation in both directions and form a single composite assembly. The handling of the holding device and the installation thereof in a wall are thereby made easier.

Preferably, the holding device comprises, on two opposite longitudinal sides of the first body parallel to the longitudinal direction of the free space, tabs extending in said direction, and it also comprises a cover provided with grooves into which said tabs fit. As a result of this configuration, the holding device also serves as a support for placing a protective cover for the tube.

Preferably, each of said first body and second body is a single part molded from a polymer material.

The invention also comprises other detail features shown in the following detailed description of an embodiment of the invention and in the attached drawings.

### Brief description of the drawings

The advantages and features of the invention will be seen based on the following description in which a preferred embodiment of the holding device according to the invention is described in a non-limiting manner with respect to the scope of the main claim, in reference to the drawings.
Figures 1 and 3 are, respectively, a top perspective view and a bottom perspective view of the device.
Figures 2 and 4 are exploded views corresponding to Figures 1 and 3.
Figures 5, 6, 7, and 8 are, respectively, a top view, a bottom view, a front view, and a side view of the device.
Figure 9 is a section view of the device corresponding to Figure 7.
Figure 10 is a perspective section view of the first body, with the same plane of section as in Figure 9.
Figure 11 is a section view of the device corresponding to Figure 8.
Figure 12 is a perspective section view of the first body, with the same plane of section as in Figure 11.
Figures 13 and 14 are, respectively, a perspective view and a top view of the second body.
Figure 15 is a partially sectioned view of the device fixed to a wall by means of a screw.
Figure 16 is a front view of the device fixed to one wall and placed against another perpendicular wall.
Figure 17 is a view similar to the one of Figure 16, after having placed a tube in the cradle of the device.
Figure 18 is a view similar to the one of Figures 16 and 17, after having rotated the first body for holding the tube.
Figure 19 is a side view of a tube held in the device.
Figure 20 is a view similar to the one of Figure 19, but with a tube having a larger diameter and with a cover coupled to the device.

### Detailed description of embodiments of the invention

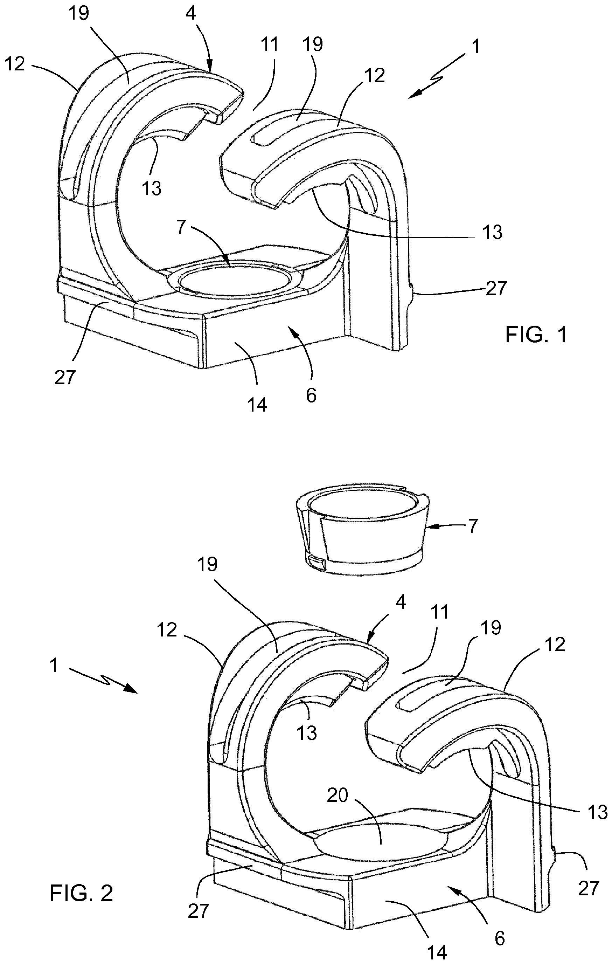

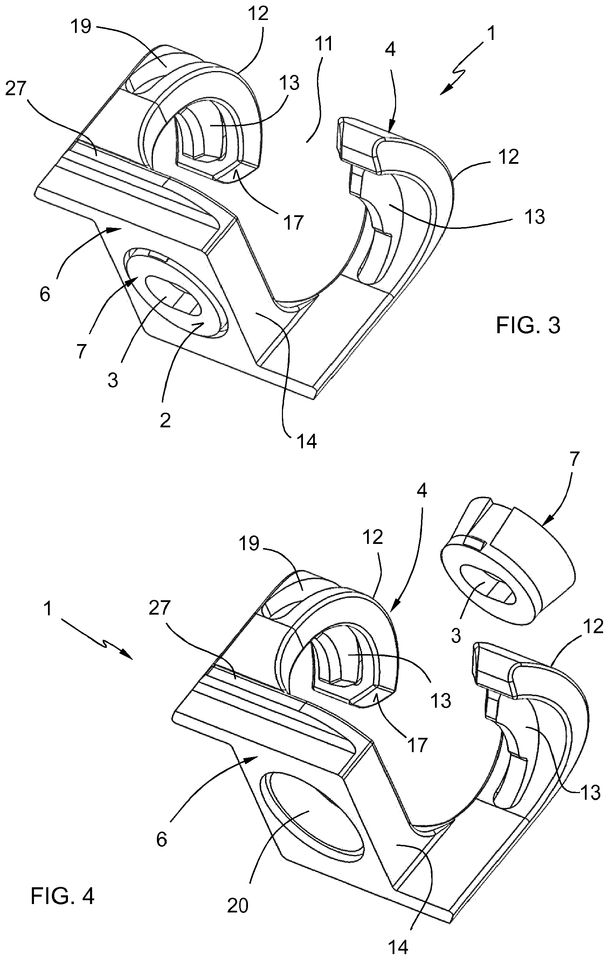

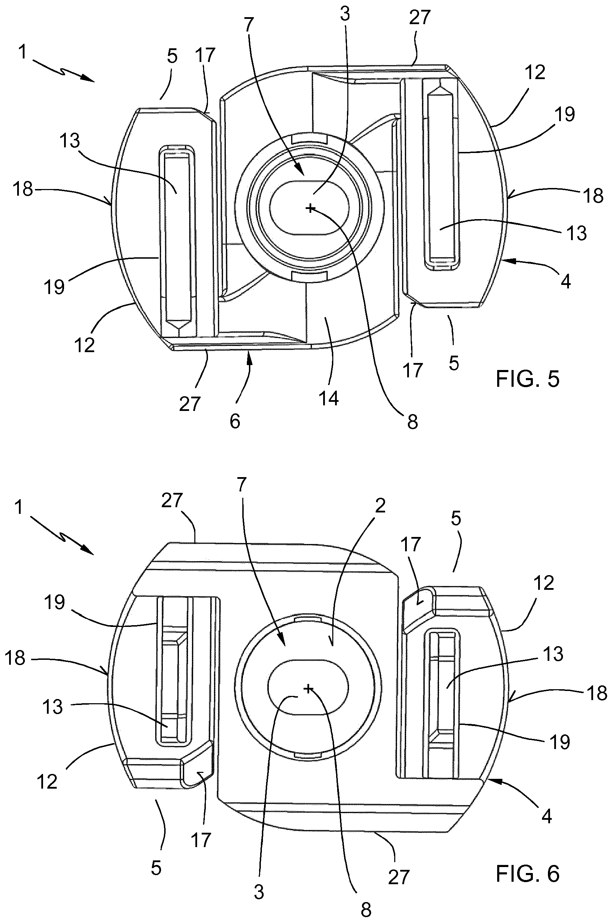

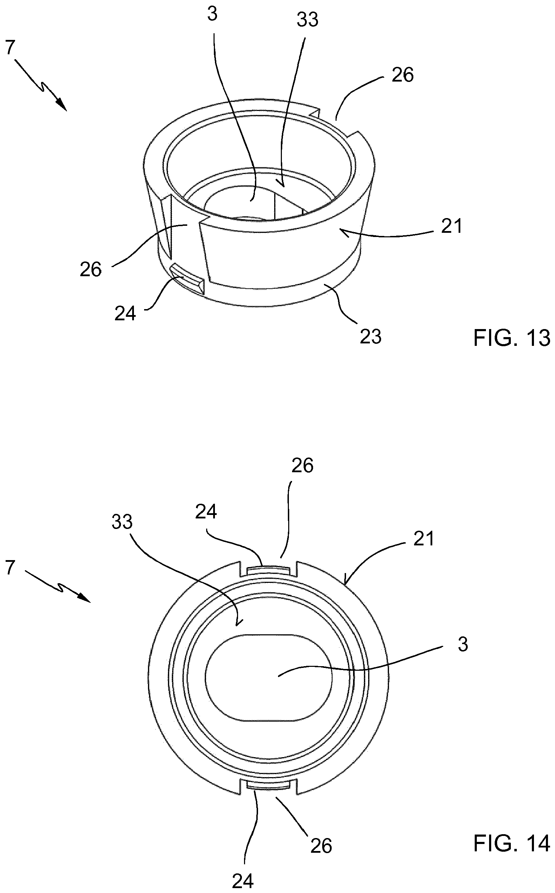

Figures 1 to 14 show a preferred embodiment of the holding device according to the invention. The holding device 1 is formed by a first body 6 and a second body 7 coupled to one another, such that the first body 6 can rotate around itself and with respect to the second body 7 about an axis of rotation 8. Each of these two bodies 6, 7 is made as a single part molded from a polymer material, for example, a thermoplastic such as PVC, polycarbonate or polypropylene, or a thermosetting resin, for example.

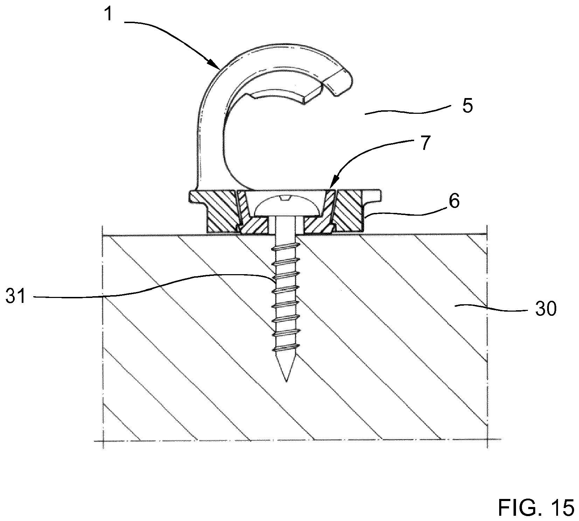

The second body 7 is the part of the holding device 1 which is fixed to a wall by means of a fixing screw 31, as shown in Figure 15, whereas the first body 6 is the rotary part which can rotate around itself and with respect to the second body 7 about the axis of rotation 8.

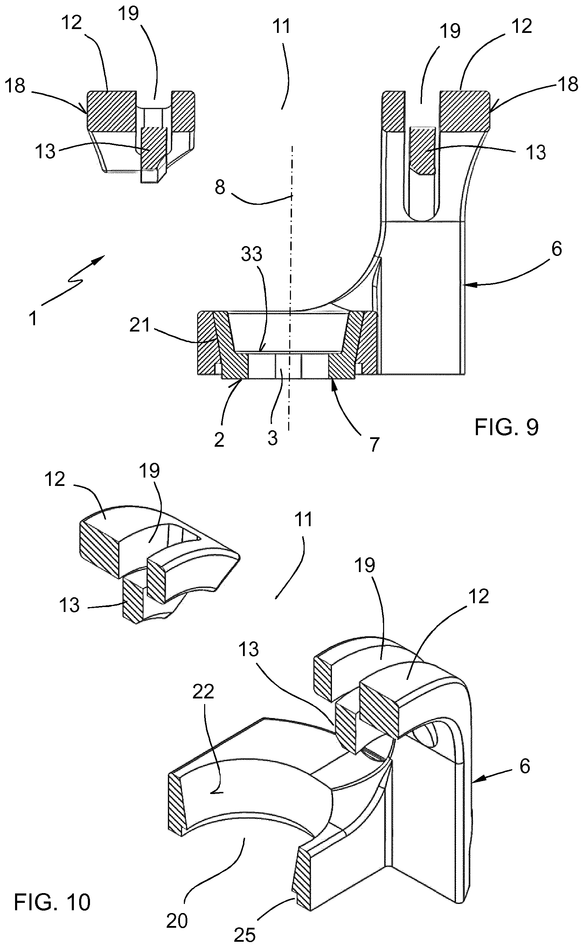

As can be seen in Figures 9, 11, 13, and 14, in the depicted embodiment the second body 7 has a frustoconical wall 21 centered in the axis of rotation 8 and tapering towards a lower end of said second body 7. This lower end of the second body 7 projects from the first body 6, thereby forming a support surface 2 through which the holding device 1 is supported on the wall 30 to which it is fixed by means of the fixing screw 31. A cylindrical wall 23 in which two teeth 24 are formed in opposite positions extends following this frustoconical wall 21. There are formed along the frustoconical wall 21, in the axial direction of the axis of rotation 8, two grooves 26 aligned with the teeth 24 the function of which is to allow releasing the second body 7 from the mold. The second body 7 has a through hole 3, preferably an elongated hole going through the support surface 2 for the passage of the fixing screw 31. A seating surface 33 intended for receiving the head of the fixing screw 31 is formed around this through hole 3.

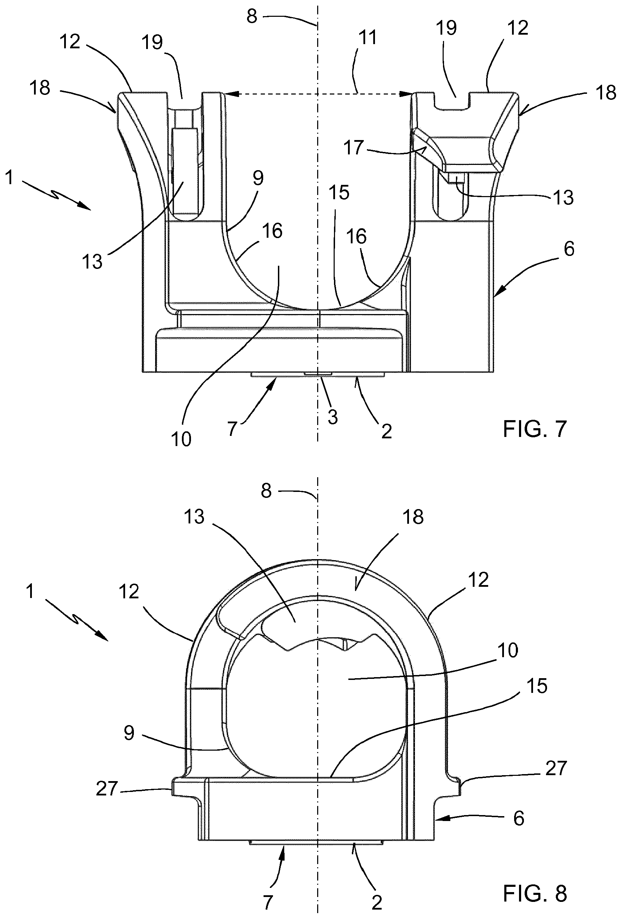

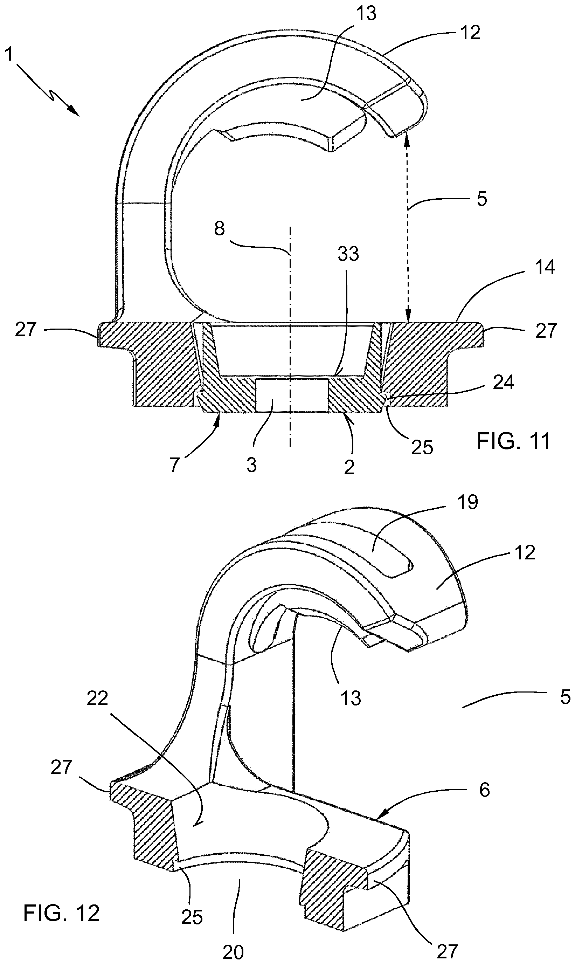

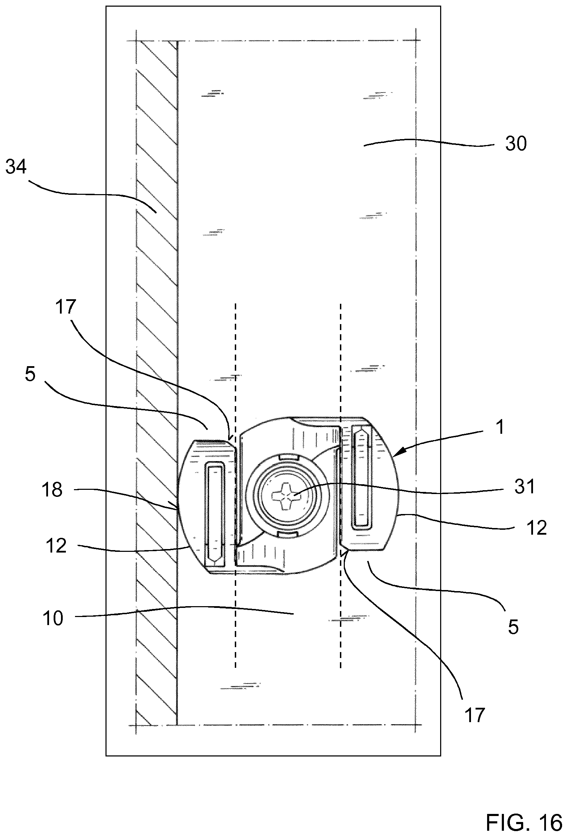

As shown in Figures 1 to 10, the first body 6 forms an open clamp 4 formed for holding a tube. In the depicted example, the open clamp 4 is formed by two hook-shaped arms 12 extending in parallel planes and in opposite directions on either side of the axis of rotation 8. The two arms 12 have the same shape and the same dimensions. Each arm 12 has a hook shape extending in cantilever fashion from a base 14 of the first body 6 in a plane parallel to the axis of rotation 8. The two arms 12 form between them a cradle 9 demarcating a free space 10 corresponding to a tube and extending in a longitudinal direction orthogonal to the axis of rotation 8. This free space 10 has been indicated in Figure 16 with discontinuous lines. The cradle 9 has a bottom 15 formed by the base 14 of the first body 6, and an open upper face 11 opposite said bottom 15 in the direction of the axis of rotation 8, for inserting the tube into said cradle 9. This open upper face 11 of the cradle 9 is formed by the separation between the two arms 12. This open upper face 11 has been indicated in Figure 7 by means of a double arrow with a discontinuous line. The separation between the base 14 of the first body 6 and the free end of each arm 12 constitutes an opening 5 of the open clamp 4 for inserting the tube into said open clamp 4 by pressure. There are therefore two openings 5 arranged in planes parallel to the axis of rotation 8 and in a symmetrical position with respect to said axis. The opening 5 has been indicated in Figure 11 by means of a double arrow with a discontinuous line. As will be explained in greater detail below, upon rotation of the first body 6 about the axis of rotation 8, the openings 5 traverse the free space 10 which was demarcated by the cradle 9 before said rotation and in which a tube has been arranged, so said rotation of the first body 6 causes the tube to be inserted by pressure into the open clamp 4 through the openings 5.

The arms 12 of the first body 6 have a configuration which facilitates the entering and snap-fitting of the tube into the open clamp 4, as well as the initial placement of the tube in the cradle 9. Each of the two arms 12 comprises an elastically flexible flange 13 extending in cantilever fashion in an inner portion of said arm 12 intended for supporting the tube, and a housing 19 in which said flange 13 is inserted upon being bent. The free end of each arm 12 has a beveled corner 17 oriented towards the free space 10. The intersection of each arm 12 with the base 14 forms a rounded corner 16 of the bottom 15 of the cradle 9 in a plane orthogonal to the longitudinal direction of the free space 10. Furthermore, each of the two arms 12 has an outer surface 18 in the shape of a circular arc centered in the axis of rotation 8, the radius of said circular arc being greater than the distance from any point of the first body 6 to said axis of rotation 8.

The first body 6 is coupled to the second body 7 such that it is integrally joined with said second body in the axial direction of the axis of rotation 8 and in the direction away from the support surface 2, i.e., in the direction away from the wall 30 in the position of use shown in Figure 15. To that end, the first body 6 has a through aperture 20 going through said first body 6 and having a frustoconical wall 22 the shape of which corresponds with the frustoconical wall 21 of the second body 7, and the second body 7 is fitted into said through aperture 20 of the first body 6. The through hole 3 going through the second body 7 opens into the bottom 15 of the cradle 9, and the seating surface 33 for the head of the fixing screw 31 is arranged in a sunken position with respect to said bottom 15 of the cradle 9.

The first body 6 is integrally joined with the second body 7 in the axial direction of the axis of rotation 8 also in the direction approaching the support surface 2. To that end, the first body 6 has an annular recess 25 following its frustoconical wall 21, such that the teeth 24 of the second body 7 are inserted into said annular recess 25 by pressure.

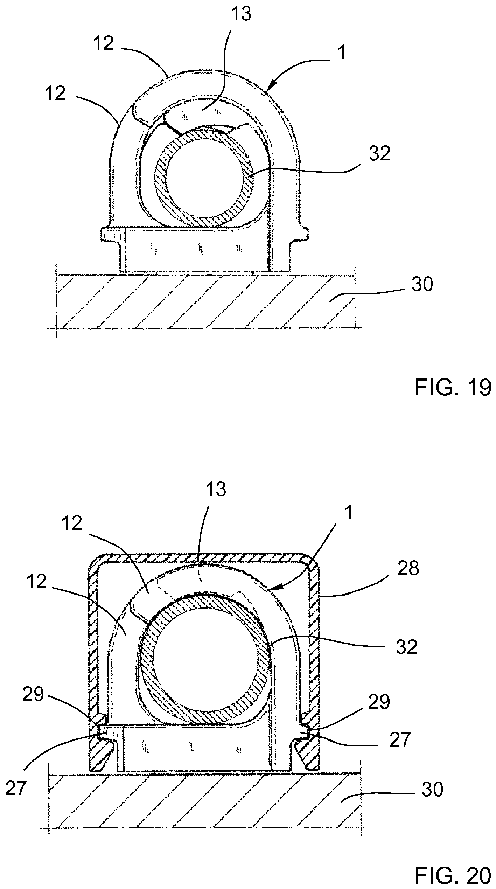

The holding device 1 optionally comprises a cover 28 which is snap-fitted onto the device, as shown in Figure 20. To that end, the first body 6 comprises, on two opposite longitudinal sides parallel to the longitudinal direction of the free space 10, tabs 27 extending in said direction, and the cover 28 is provided with grooves 29 into which said tabs 27 fit.

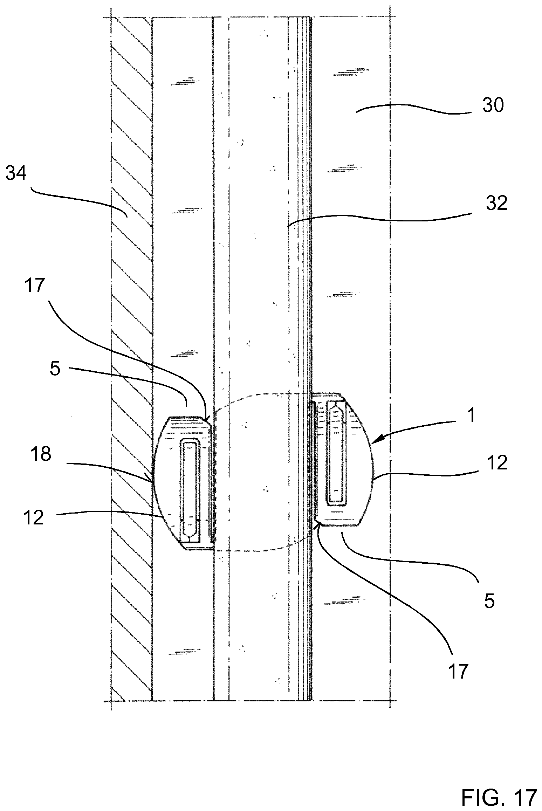

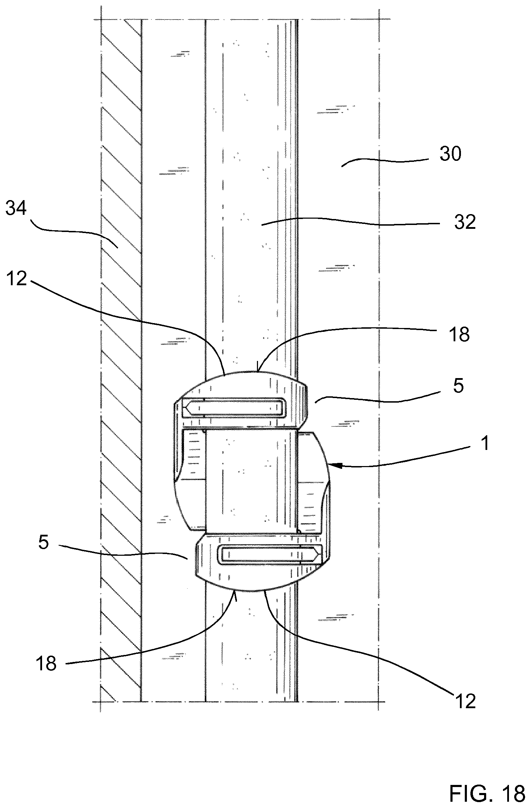

The way of using the holding device 1 is described below in reference to Figures 16 to 18. First, the holding device is fixed to the wall 30 by means of a fixing screw 31 going through the through hole 3 and the head of which sits on the seating surface 33 of the second body 7. In the example depicted in these drawings, there is a second wall 34 extending from the wall 30 in a manner orthogonal thereto. The tube 32 to be held is desirably parallel to the second wall 34 and as close as possible to said wall. To that end, the holding device 1 has been placed with the longitudinal direction of the free space 10 parallel to the second wall 34 and with the outer surface 18 in the shape of a circular arc of one of the arms 12 abutting with said second wall 34. This is the position shown in Figure 16. The tube 32 is then placed. To that end, the tube 32 is simply moved towards the wall 30 in the direction orthogonal thereto, such that the tube 32 goes through the open upper face 11 of the cradle 9 and is arranged at the bottom 15 of said cradle, thereby occupying the free space 10. This is the position shown in Figure 17. To hold the tube 32 by means of the open clamp 4, the first body 6 is rotated 90° about the axis of rotation 8 to the position shown in Figure 18. By performing this rotational movement, the two openings 5 defined by the ends of the two arms 12 traverse the free space 10 shown in Figure 16, so the tube 32 is inserted by pressure into the open clamp 4 simultaneously through the two openings 5 and is firmly held therein. To release the tube 32 from the holding device 1, rotating the first body 6 90° in the opposite direction will suffice.

Figure 19 shows a tube 32 having a small diameter held by the holding device 1. In this case, the tube is held by the flanges 13 of the arms 12. The flanges 13 experience a small degree of elastic bending as a result of the force exerted by the tube 32 when it is inserted into the open clamp 4.

Figure 20 shows another tube 32 having a larger diameter than the preceding one, held by the holding device 1. In this case, the flanges 13 experience a greater degree of elastic bending as a result of the force exerted by the tube 32 when it is inserted into the open clamp 4, such that said flanges 13 are inserted into the housings 19 and retracted therein. As a result thereof, the arms 12 experience a small degree of elastic bending due to the force exerted by the tube 32, so the tube 12 is held by the inner surface of said arms 12, and not only by the flanges 13.

The same Figure 20 depicts a cover 28 which is optionally placed for covering the tube 32. The cover 28 is placed by simply snap-fitting the tabs 27 of the first body 6 into the grooves 29 of the cover.

The drawings depict a tube 32 having a constant circular section typically corresponding to a fluid-carrying tube. Nevertheless, the tube may have other shapes. In particular, the tube can be a flexible corrugated sheath for carrying cables.

## Claims

1. A holding device (1) which can be fixed to a wall for holding a tube, said holding device (1) comprising a support surface (2) for supporting said holding device (1) against a wall, a through hole (3) going through said support surface (2) for the passage of a fixing screw, and at least one open clamp (4) formed for holding a tube, said open clamp (4) being formed in a first body (6) of said holding device (1) which can rotate around itself and about an axis of rotation (8), and said open clamp (4) having an opening (5) for inserting said tube into said open clamp (4) by pressure, and wherein:
- said holding device (1) forms a cradle (9) demarcating a free space (10) corresponding to said tube, said free space (10) extending in a longitudinal direction orthogonal to said axis of rotation (8), and said cradle (9) having a bottom (15) and an open upper face (11) opposite said bottom (15) in the direction of said axis of rotation (8), for inserting said tube into said cradle (9);
- said open clamp (4) is arranged such that said opening (5) is located on a plane parallel to said axis of rotation (8), and by means of rotation of said first body (6) about said axis of rotation (8), said opening (5) traverses said free space (10) which was demarcated by said cradle (9) before said rotation;
**characterized in that** it comprises a second body (7) in which said through hole (3) and said support surface (2) are formed, said first body (6) and second body (7) being coupled to one another such that said first body (6) can rotate around itself and with respect to said second body (7) about said axis of rotation (8); and said first body (6) is integrally joined with said second body (7) in the axial direction of said axis of rotation (8) and in the direction away from said support surface (2).

2. The holding device (1) according to claim 1, **characterized in that** said open clamp (4) is formed by at least one hook-shaped arm (12) extending in cantilever fashion on a plane parallel to said axis of rotation (8) from a base (14) of said first body (6) forming said bottom (15) of the cradle (9), such that said opening (5) of the open clamp (4) is formed by the separation between said base (14) of the first body (6) and the free end of said arm (12).

3. The holding device (1) according to claim 2, **characterized in that** said arm (12) comprises an elastically flexible flange (13) extending in cantilever fashion in an inner portion of said arm (12) intended for supporting said tube, and a housing (19) in which said flange (13) is inserted upon being bent.

4. The holding device (1) according to any one of claims 2 or 3, **characterized in that** the intersection of said arm (12) with said base (14) forms a rounded corner (16) of said bottom (15) of the cradle (9) in a plane orthogonal to the longitudinal direction of said free space (10).

5. The holding device (1) according to any one of claims 2 to 4, **characterized in that** said arm (12) has at its free end a beveled corner (17) oriented towards said free space (10).

6. The holding device (1) according to any one of claims 2 to 5, **characterized in that** said arm (12) has an outer surface (18) in the shape of a circular arc centered in said axis of rotation (8), the radius of said circular arc being greater than the distance from any point of said first body (6) to said axis of rotation (8).

7. The holding device (1) according to any one of claims 2 to 6, **characterized in that** said open clamp (4) is formed by two of said hook-shaped arms (12) extending in parallel planes and in opposite directions on either side of said axis of rotation (8).

8. The holding device (1) according to any one of claims 1 to 7, **characterized in that** said first body (6) has a through aperture (20) going through said first body (6), said second body (7) is fitted into said through aperture (20) of the first body (6) such that a lower end of said second body (7) projects from said first body (6) and forms said support surface (2), said through hole (3) goes through said second body (7) and opens into the bottom (15) of said cradle (9), and said second body (7) has a seating surface (33) around said through hole (3) for receiving the head of a fixing screw (31), said seating surface (33) being arranged in a sunken position with respect to said bottom (15) of the cradle (9).

9. The holding device (1) according to claim 8, **characterized in that** said second body (7) has a frustoconical wall (21) centered in said axis of rotation (8) and tapering towards the end of said second body (7) forming said support surface (2), and said through aperture (20) has a frustoconical wall (22) the shape of which corresponds with said frustoconical wall (21) of the second body (7).

10. The holding device (1) according to claim 9, **characterized in that** said second body (7) has a cylindrical wall (23) following its frustoconical wall (21) and teeth (24) formed in said cylindrical wall (23), and said first body (6) has an annular recess (25) following its frustoconical wall (21), such that said teeth (24) are inserted into said annular recess (25) by pressure and keep said first body (6) integrally joined with said second body (7) in the axial direction of said axis of rotation (8) and in the direction approaching said support surface (2);

11. The holding device (1) according to any one of claims 1 to 10, **characterized in that** it comprises, on two opposite longitudinal sides of said first body (6) parallel to the longitudinal direction of said free space (10), tabs (27) extending in said direction, and **in that** it comprises a cover (28) provided with grooves (29) into which said tabs (27) fit.

12. The holding device (1) according to any one of claims 1 to 11, **characterized in that** each of said first body (6) and second body (7) is a single part molded from a polymer material.

## Patentansprüche

1. Haltevorrichtung (1), die zum Halten eines Rohres an einer Wand befestigt werden kann, wobei die Haltevorrichtung (1) eine Stützfläche (2) zum Stützen der Haltevorrichtung (1) gegen eine Wand, ein Durchgangsloch (3), welches durch die Stützfläche (2) für den Durchgang einer Befestigungsschraube hindurch geht, und mindestens eine offene Klemme (4), die zum Halten eines Rohres ausgebildet ist, umfasst, wobei die offene Klemme (4), in einem ersten Körper (6) der Haltevorrichtung (1) ausgebildet ist, der um sich selbst und um eine Drehachse (8) rotieren kann, und wobei die offene Klemme (4) eine Öffnung (5) zum Einsetzen des Rohres in die offene Klemme (4) durch Druck aufweist, und wobei:
- die Haltevorrichtung (1) eine Gabel (9) ausbildet, die einen zum Rohr korrespondierenden freien Raum (10) begrenzt, wobei sich der freie Raum (10) in einer Längsrichtung orthogonal zur Drehachse erstreckt, und die Gabel (9) einen Boden (15) und eine dem Boden (15) in Richtung der Drehachse (8) gegenüberliegende offene Oberseite (11) zum Einführen des Rohres in die Gabel (9) aufweist;
- die offene Klemme (4) so angeordnet ist, dass sich die Öffnung in einer Ebene parallel zur Drehachse (8) befindet und durch die Drehung des ersten Körpers (6) um die Drehachse (8) die Öffnung den freien Raum (10) durchquert, der vor der Drehung durch die Gabel (9) begrenzt war,
**dadurch gekennzeichnet, dass** sie einen zweiten Körper (7) umfasst, in dem das Durchgangsloch (3) und die Stützfläche (2) ausgebildet sind, wobei der erste Körper und der zweite Körper so miteinander gekoppelt sind, dass der erste Körper (6) um sich selbst und in Bezug auf den zweiten Körper (7) um die Drehachse (8) rotieren kann; und der erste Körper (6) mit dem zweiten Körper (7) in der axialen Richtung der Drehachse und in der Richtung weg von der Stützfläche (2) integral verbunden ist.

2. Haltevorrichtung (1) nach Anspruch 1, **dadurch gekennzeichnet, dass** die offene Klemme (4) durch zumindest einen hakenförmigen Arm (12) ausgebildet ist, der sich in freitragender Art in einer Ebene parallel zur Drehachse (8) von einer Basis (14) des ersten Körpers (6) aus erstreckt, die den Boden (15) der Gabel (9) ausbildet, sodass die Öffnung (5) der offenen Klemme (4) durch die Aufteilung zwischen der Basis (14) des ersten Körpers (6) und den freien Enden des Armes (12) gebildet wird.

3. Haltevorrichtung (1) nach Anspruch 2, **dadurch gekennzeichnet, dass** der Arm (12) einen elastisch biegsamen hervorspringenden Rand (13) aufweist, der sich freitragend in einem inneren Abschnitt des Armes (12) erstreckt, und der dazu bestimmt ist, das Rohr zu tragen und ein Gehäuse (19) aufweist, in dem der hervorspringenden Rand (13) eingesetzt ist, wenn er gebogen wird.

4. Haltevorrichtung (1) nach einem der Ansprüche 2 oder 3, **dadurch gekennzeichnet, dass** die Schnittstelle des Armes (12) mit der Basis (14) eine abgerundete Ecke (16) des Bodens (15) der Gabel (9) in einer Ebene orthogonal zur Längsrichtung des freien Raumes (10) ausbildet.

5. Haltevorrichtung (1) nach einem der Ansprüche 2 bis 4, **dadurch gekennzeichnet, dass** der Arm (12) an seinem freien Ende eine abgeschrägte Ecke (17) aufweist, die zu dem freien Raum (10) hin ausgerichtet ist.

6. Haltevorrichtung (1) nach einem der Ansprüche 2 bis 5, **dadurch gekennzeichnet, dass** der Arm (12) eine Außenfläche (18) in Form eines Kreisbogens aufweist, der in der Drehachse (8) zentriert ist, wobei der Radius des Kreisbogens größer ist als der Abstand von jedem Punkt des ersten Körpers zur Rotationsachse (8).

7. Haltevorrichtung (1) nach einem der Ansprüche 2 bis 6, **dadurch gekennzeichnet, dass** die offene Klemme (4) durch zwei der hakenförmigen Arme (12) gebildet wird, die sich in parallelen Ebenen und in entgegengesetzten Richtungen auf beiden Seiten der Drehachse (8) erstrecken.

8. Haltevorrichtung (1) nach einem der Ansprüche 1 bis 7, **dadurch gekennzeichnet, dass** der erste Körper (6) eine Durchgangsöffnung (20) aufweist, die durch den ersten Körper (6) hindurchgeht, wobei der zweite Körper (7) in der Durchgangsöffnung (20) des ersten Körpers (6) derart eingepasst ist, dass ein unteres Ende des zweiten Körpers (7) aus dem ersten Körper (6) herausragt und die Stützfläche (2) bildet, wobei das Durchgangsloch (6) durch den zweiten Körper (7) hindurch geht und sich in den Boden (15) der Gabel (9) hin öffnet, und wobei der zweite Körper eine Auflagefläche (33) um das Durchgangsloch (3) zur Aufnahme des Kopfes einer Befestigungsschraube (31) hat, wobei die Auflagefläche (33) in einer versenkten Position in Bezug auf den Boden (15) der Gabel (9) angeordnet ist.

9. Haltevorrichtung (1) nach Anspruch 8, **dadurch gekennzeichnet, dass** der zweite Körper (7) eine kegelstumpfförmige Wand (21) aufweist, die in der Drehachse (8) zentriert ist, und sich in Richtung des Endes des zweiten Körpers (7) hin verjüngt, die die Stützfläche (2) ausbildet und wobei die Durchgangsöffnung (20) eine kegelstumpfförmige Wand (22) aufweist, deren Form mit der kegelstumpfförmigen Wand (21) des zweiten Körpers (7) korrespondiert.

10. Haltevorrichtung (1) nach Anspruch 9, **dadurch gekennzeichnet, dass** der zweite Körper (7) eine zylindrische Wand (23), die sich an seine kegelstumpfförmige Wand (21) anschließt, und Zähne (24), die in der zylindrischen Wand (23) ausgebildet sind, aufweist, und wobei der erste Körper (6) eine ringförmige Ausnehmung (25), die sich an seine kegelstumpfförmige Wand (21) anschließt, aufweist, sodass die Zähne (24) in die ringförmige Ausnehmung (25) durch Druck eingesetzt werden, und den ersten Körper (6) integral mit dem zweiten Körper (7) verbunden hält, in der axialen Richtung der Drehachse (8) und in der Richtung, die sich der Stützfläche (2) nähert.

11. Haltevorrichtung (1) nach einem der Ansprüche 1 bis 10, **dadurch gekennzeichnet, dass** sie an zwei gegenüberliegenden Längsseiten des ersten Körpers (6) parallel zur Längsrichtung des freien Raumes (10) Flansche (27) in Richtung des freien Raumes (10) aufweist, die sich in diese Richtung erstrecken, und dass sie eine Abdeckung (28) aufweist, die mit Nuten (29) versehen ist, in welche die Flansche (27) passen.

12. Haltevorrichtung (1) nach einem der Ansprüche 1 bis 11, **dadurch gekennzeichnet, dass** jeder von erstem Körper (6) und zweitem Körper (7) ein Einzelteil ist, das aus einem Polymermaterial geformt ist.

## Revendications

1. Dispositif de maintien (1) qui peut être fixé à une paroi pour maintenir un tube, ledit dispositif de maintien (1) comprenant une surface d'appui (2) pour appuyer ledit dispositif de maintien (1) contre une paroi, un trou traversant (3) qui traverse ladite surface d'appui (2) pour le passage d'une vis de fixation, et au moins une bride d'attache ouverte (4) qui est formée pour maintenir un tube, la dite bride d'attache ouverte (4) étant formée dans un premier corps (6) dudit dispositif de maintien (1) qui peut tourner autour de lui-même et autour d'un axe de rotation (8), et ladite bride d'attache ouverte (4) comprenant une ouverture (5) pour insérer ledit tube à l'intérieur de ladite bride d'attache ouverte (4) par pression, et dans lequel :
- ledit dispositif de maintien (1) forme un berceau (9) qui délimite un espace libre (10) qui correspond audit tube, ledit espace libre (10) s'étendant dans une direction longitudinale qui est orthogonale audit axe de rotation (8), et ledit berceau (9) comprenant un fond (15) et une face supérieure ouverte (11) qui est opposée audit fond (15) dans la direction dudit axe de rotation (8), pour insérer ledit tube à l'intérieur dudit berceau (9) ; et
- ladite bride d'attache ouverte (4) est agencée de telle sorte que ladite ouverture (5) soit localisée sur un plan qui est parallèle audit axe de rotation (8), et au moyen de la rotation dudit premier corps (6) autour dudit axe de rotation (8), ladite ouverture (5) traverse ledit espace libre (10) qui était délimité par ledit berceau (9) avant ladite rotation ;
**caractérisé en ce qu'**il comprend un second corps (7) dans lequel ledit trou traversant (3) et ladite surface d'appui (2) sont formés, ledit premier corps (6) et ledit second corps (7) étant couplés l'un à l'autre de telle sorte que ledit premier corps (6) puisse tourner autour de lui-même et par rapport audit second corps (7) autour dudit axe de rotation (8) ; et ledit premier corps (6) est solidaire dudit second corps (7) dans la direction axiale dudit axe de rotation (8) et dans le sens d'éloignement par rapport à ladite surface d'appui (2).

2. Dispositif de maintien (1) selon la revendication 1, **caractérisé en ce que** ladite bride d'attache ouverte (4) est formée par au moins un bras en forme de crochet (12) qui s'étend en porte-à-faux sur un plan qui est parallèle audit axe de rotation (8) depuis une base (14) dudit premier corps (6) qui forme ledit fond (15) du berceau (9), de telle sorte que ladite ouverture (5) de ladite bride d'attache ouverte (4) soit formée par la séparation entre ladite base (14) du premier corps (6) et l'extrémité libre dudit bras (12).

3. Dispositif de maintien (1) selon la revendication 2, **caractérisé en ce que** ledit bras (12) comprend une aile flexible élastiquement (13) qui s'étend en porte-à-faux dans une partie interne dudit bras (12) qui est destinée à recevoir en appui ledit tube, et un logement (19) à l'intérieur duquel ladite aile (13) est insérée quand elle est fléchie.

4. Dispositif de maintien (1) selon l'une quelconque des revendications 2 ou 3, **caractérisé en ce que** l'intersection dudit bras (12) avec ladite base (14) forme un coin arrondi (16) dudit fond (15) du berceau (9) dans un plan qui est orthogonal à la direction longitudinale dudit espace libre (10).

5. Dispositif de maintien (1) selon l'une quelconque des revendications 2 à 4, **caractérisé en ce que** ledit bras (12) comporte, au niveau de son extrémité libre, un coin biseauté (17) qui est orienté en direction dudit espace libre (10).

6. Dispositif de maintien (1) selon l'une quelconque des revendications 2 à 5, **caractérisé en ce que** ledit bras (12) comprend une surface externe (18) qui présente la forme d'un arc circulaire qui est centré sur ledit axe de rotation (8), le rayon dudit arc circulaire étant plus grand que la distance depuis un quelconque point dudit premier corps (6) jusqu'audit axe de rotation (8).

7. Dispositif de maintien (1) selon l'une quelconque des revendications 2 à 6, **caractérisé en ce que** ladite bride d'attache ouverte (4) est formée par deux desdits bras en forme de crochet (12) qui s'étendent dans des plans parallèles et dans des directions opposées sur l'un et l'autre côtés dudit axe de rotation (8).

8. Dispositif de maintien (1) selon l'une quelconque des revendications 1 à 7, **caractérisé en ce que** ledit premier corps (6) comprend une ouverture traversante (20) qui traverse ledit premier corps (6), ledit second corps (7) est ajusté dans ladite ouverture traversante (20) du premier corps (6) de telle sorte qu'une extrémité inférieure dudit second corps (7) fasse saillie depuis ledit premier corps (6) et forme ladite surface d'appui (2), ledit trou traversant (3) traverse ledit second corps (7) et débouche dans ledit fond (15) dudit berceau (9), et ledit second corps (7) comprend une surface d'assise (33) autour dudit trou traversant (3) pour recevoir la tête d'une vis de fixation (31), ladite surface d'assise (33) étant agencée en une position enfoncée par rapport audit fond (15) du berceau (9).

9. Dispositif de maintien (1) selon la revendication 8, **caractérisé en ce que** ledit second corps (7) comprend une paroi tronconique (21) qui est centrée sur ledit axe de rotation (8) et qui se rétrécit en direction de l'extrémité dudit second corps (7) qui forme ladite surface d'appui (2), et ladite ouverture traversante (20) comprend une paroi tronconique (22) dont la forme correspond à celle de ladite paroi tronconique (21) du second corps (7).

10. Dispositif de maintien (1) selon la revendication 9, **caractérisé en ce que** ledit second corps (7) comprend une paroi cylindrique (23) qui fait suite à sa paroi tronconique (21) et des dents (24) qui sont formées dans ladite paroi cylindrique (23), et ledit premier corps (6) comporte un évidement annulaire (25) qui fait suite à sa paroi tronconique (21), de telle sorte que lesdites dents (24) soient insérées dans ledit évidement annulaire (25) par pression et qu'elles maintiennent ledit premier corps (6) solidaire dudit second corps (7) dans la direction axiale dudit axe de rotation (8) et dans le sens d'approche par rapport à ladite surface d'appui (2).

11. Dispositif de maintien (1) selon l'une quelconque des revendications 1 à 10, **caractérisé en ce qu'**il comprend, sur deux côtés longitudinaux opposés dudit premier corps (6) parallèles à la direction longitudinale dudit espace libre (10), des pattes (27) qui s'étendent dans ladite direction, et **en ce qu'**il comprend un couvercle (28) qui est muni de gorges (29) dans lesquelles s'ajustent lesdites pattes (27).

12. Dispositif de maintien (1) selon l'une quelconque des revendications 1 à 11, **caractérisé en ce que** chaque corps parmi ledit premier corps (6) et ledit second corps (7) est une unique pièce qui est moulée à partir d'un matériau polymérique.
